(19) Europäisches Patentamt
European Patent Office
Office européen des brevets

(11) **EP 0 954 746 B1**

(12) **EUROPÄISCHE PATENTSCHRIFT**

(45) Veröffentlichungstag und Bekanntmachung des Hinweises auf die Patenterteilung:
**12.06.2002 Patentblatt 2002/24**

(21) Anmeldenummer: **98963515.6**

(22) Anmeldetag: **26.11.1998**

(51) Int Cl.$^7$: **G01L 3/12**, G01L 3/10

(86) Internationale Anmeldenummer:
**PCT/EP98/07620**

(87) Internationale Veröffentlichungsnummer:
**WO 99/28717 (10.06.1999 Gazette 1999/23)**

(54) **VERFAHREN ZUR BESTIMMUNG DES AUF EINEN UM EINE DREHACHSE DREHBAR ANTREIBBAREN ROTATIONSKÖRPER AUSGEÜBTEN DREHMOMENTS**

METHOD FOR DETERMINING THE TORQUE EXERTED ON A ROTATING BODY WHICH CAN BE ROTATIONALLY DRIVEN AROUND A ROTATIONAL AXIS

PROCEDE POUR LA DETERMINATION DU COUPLE EXERCE SUR UN CORPS ROTATIF POUVANT ETRE ENTRAINE EN ROTATION AUTOUR D'UN AXE DE ROTATION

(84) Benannte Vertragsstaaten:
**AT BE CH CY DE ES FR IT LI LU NL**

(30) Priorität: **27.11.1997 DE 19752500**
**25.11.1998 DE 19854268**

(43) Veröffentlichungstag der Anmeldung:
**10.11.1999 Patentblatt 1999/45**

(73) Patentinhaber: **Gerlitzki, Siegfried**
**55283 Nierstein (DE)**

(72) Erfinder: **Gerlitzki, Siegfried**
**55283 Nierstein (DE)**

(74) Vertreter: **Klein, Thomas, Dipl.-Ing. (FH)**
**Wackernheimer Strasse 27**
**55262 Heidesheim (DE)**

(56) Entgegenhaltungen:
**DE-A- 19 614 744        US-A- 3 871 215**
**US-A- 4 513 628**

## Beschreibung

Die Erfindung bezieht sich auf ein Verfahren und eine Vorrichtung zur Bestimmung des auf einen um eine Drehachse drehbar antreibbaren Rotationskörpers, insbesondere auf die Tretlagerwelle eines Fahrrads ausgeübten Drehmoments, mit einem ersten und einem zweiten Meßgeber, die an dem Rotationskörper in axialem Abstand oder radialem Abstand zueinander angeordnet sind und aus den Rotationskörper radial umschließenden Ringen aus alternierend unterschiedliches Signalverhalten aufweisenden Feldern bestehen, wobei die Anzahl der Felder beider Ringe gleich ist, mit einem dem ersten Meßgeber zugeordneten ersten Meßaufnehmer und einem dem zweiten Meßgeber zugeordneten zweiten Meßaufnehmer, die beide Ausgangssignale liefern, aus denen erste und zweite Rechtecksignale gebildet werden, wobei aus den Abständen von Flanken der ersten und zweiten Rechtecksignale über einer vollen Umdrehung des Rotationskörpers das durchschnittliche Drehmoment bestimmt wird.

Ein Verfahren und eine Vorrichtung der eingangs genannten Art sind aus der DE 40 38 413 A1 bekannt. Dabei ist einer der Ringe mit den alternierend unterschiedliches Signalverhalten aufweisenden Feldern durch eine Bezugsmarke unterbrochen. Dies bedeutet, daß ein Meßzyklus immer nur dann beginnen kann, wenn die Bezugsmarke sich an dem ihr zugeordneten Meßaufnehmer vorbei bewegt. Dies kann im Extremfall bedeuten, daß erst eine fast vollständige Umdrehung des Rotationskörpers erfolgen muß, ehe ein Meßzyklus beginnen kann. Weiterhin wird mit diesem Verfahren nur eine Stützstelle eines beliebigen Drehmomentverlaufes innerhalb einer vollständigen Umdrehung erfaßt. Die Berechnung des durchschnittlichen Drehmoments oder der Arbeit während einer oder mehrerer vollständiger Umdrehungen kann somit nur bei konstantem Drehmoment richtig erfolgen.

Weiterhin ist eine Erfassung sehr kleiner Verdrehwinkel und kleiner Drehmomente am Rotationskörper schwierig, da die Fertigungstoleranzen insbesondere der den Rotationskörper umschließenden Ringe mit den Feldern Grenzen setzen.

Weiterhin ist aus der US-A-38 71 215 ein Verfahren und eine Vorrichtung zur Bestimmung des auf einen um eine Drehachse drehbar antreibbaren Rotationskörpers ausgeübten Drehmoments bekannt. Dabei sind auf dem Rotationskörper im Abstand zueinander zwei Doppelbänder aus alternierend unterschiedliches Signalverhalten aufweisenden Feldern angeordnet. wobei jedem Einzelband der Doppelbänder ein Meßaufnehmer zugeordnet ist. Von jedem Meßaufnehmer wird eine binäre Information geliefert, die in ein entsprechendes elektrisches Signal gewandelt wird. Aus sowohl den elektrischen Signalen der Einzelbänder des einen Doppelbandes als auch aus den elektrischen Signalen des zweiten Doppelbandes wird jeweils ein Differenz-Primärsignal gebildet, woraus wiederum eine Impulsfolge von Spannungsimpulsen gebildet wird, deren Höhe fest aber deren Breite variabel ist und ein Maß des auf den Rotationskörper einwirkenden Drehmoments ist.

Aufgabe der Erfindung ist es daher ein Verfahren und eine Vorrichtung der eingangs genannten Art zu schaffen, durch die bei einfachem Aufbau weitgehend verzögerungsfrei nach Beginn einer Drehmomentbeaufschlagung des Rotationskörpers ein Meßzyklus startet und eine Erfassung des tatsächlichen durchschnittlichen Drehmomentes und der verrichteten Arbeit ermöglicht wird.

Diese Aufgabe wird erfindungsgemäß dadurch gelöst, daß die alternierend unterschiedliches Signalverhalten aufweisenden Felder unterbrechungslose Ringe bilden, daß über eine oder mehrere vollständige Umdrehungen des unbelasteten, drehmomentlosen Rotationskörpers die Flankenabstände $T_{ml}$ bestimmter Flanken der ersten Rechtecksignale und die Abstände $\alpha_{ml}$ bestimmter Flanken der zweiten Rechtecksignale zu bestimmten Flanken der ersten Rechtecksignale jeweils aufsummiert und das momentlose Verhältnis

$$\beta_{ml} = (\alpha_{ml1} + \alpha_{ml2} + .... \alpha_{mln})/(T_{ml1} + T_{ml2} + .... T_{mln}) = \Sigma\alpha_{mln}/\Sigma T_{mln}$$

gebildet wird, daß über eine oder mehrere vollständige Umdrehungen des mit dem zu bestimmenden Drehmoment belasteten Rotationskörpers die Flankenabstände $T_m$ bestimmter Flanken der ersten Rechtecksignale und die Abstände $\alpha_m$ bestimmter Flanken der zweiten Rechtecksignale zu bestimmten Flanken der ersten Rechtecksignale jeweils aufsummiert und das momentbeaufschlagte Verhältnis

$$\beta_m = (\alpha_{m1} + \alpha_{m2} + .... \alpha_{mn})/(T_{m1} + T_{m2} + .... T_{mn}) = \Sigma\alpha_{mn}/\Sigma_{mn}$$

gebildet wird, daß die Arbeit an dem momentbeaufschlagten Rotationskörper bestimmt wird aus der Gleichung

$$W = \int_{O}^{2\pi} Md\varphi = \overline{M} \cdot 2\pi \approx (\beta_m - \beta_{ml}) \cdot k,$$

wobei k eine Kalibrierkonstante und $\varphi$ der Drehwinkel des Rotationskörpers ist und daß das auf den Rotationskörper ausgeübte durchschnittliche Drehmoment aus der Gleichung

$$\overline{M} = W/2\pi \approx (\beta_m - \beta_{ml}) \cdot k/2\pi$$

bestimmt wird. Die Abstände $T_{ml}$, $T_m$, $\alpha_{ml}$ und $\alpha_m$ sowie die Zeit t können dabei mittels eines Zählers hoher Oszilatorfrequenz mit hoher Genauigkeit erfaßt werden. Durch das momentlose Verhältnis $\beta_{ml}$ wird ein Referenzwert geschaffen, in dem bereits toleranzbedingte Abweichungen der unterschiedliches Signalverhalten aufweisenden Felder sowie die Abstände $\alpha_{ml}$ enthalten sind. Dies ermöglicht es zum einen die Felder kostengünstig und mit geringem Aufwand herzustellen, da keine hohen Toleranzen eingehalten werden müssen. Zum anderen können die den Rotationskörper radial umschließenden Ringe in beliebiger Zuordnung ihrer Felder zueinander auf dem Rotationskörper angeordnet werden, was die Herstellung erheblich vereinfacht und verbilligt, sowie keinerlei Justagearbeiten erfordert. Da ein Meßzyklus sich immer über eine oder mehrere vollständige Umdrehungen des Rotationskörpers erstreckt, erfolgt nicht nur eine Kompensation der toleranzbedingten Abweichungen der Felder, sondern es kann auch ein Meßzyklus an jeder bestimmten Flanke der ersten Rechtecksignale beginnen, was bedeutet, daß bei entsprechender Anzahl an Feldern fast unmittelbar nach Beginn einer Drehmomenteinleitung bereits der erste Meßzyklus startet. Ein Abwarten, bis eine Bezugsmarke ein Signal auslöst, ist nicht erforderlich.

Darüber hinaus ist aufgrund der Toleranzkompensation auch eine Ermittlung sehr kleiner Drehmomente mit hoher Genauigkeit möglich.

Über das durchschnittliche Drehmoment hinaus kann auch die durchschnittliche Leistung nach der Gleichung

$$\overline{P} = W/t = (\beta_m - \beta_{ml}) \cdot k/t$$

gebildet werden, wobei t die Zeit der einen oder mehreren vollständigen Umdrehungen des Rotationskörpers ist.

Um auf einfache Weise Veränderungen der Drehmomentbeaufschlagungen des Rotationskörpers anzeigen zu können, können nach Ablauf eines Meßzyklusses selbsttätig ein oder mehrere weitere Meßzyklen durchgeführt werden.

Da die Kalibrierkonstante sowie das momentlose Verhältnis $\beta_{ml}$ unveränderliche Größen sind, kann zur Reduzierung von Rechnerleistung die Kalibrierkonstante k und/oder das momentlose Verhältnis $\beta_{ml}$ in einem separaten Verfahren ermittelt werden und als konstante Speicherwerte für jede Drehmomentbestimmung abrufbar gespeichert sein.

Zur Bildung des momentlosen Verhältnisses $\beta_{ml}$ oder des momentbeaufschlagten Verhältnisses $\beta_m$ können die Flankenabstände der benachbarten gleichsinnigen oder der benachbarten gegensinnigen Flanken der ersten Rechtecksignale aufsummiert werden.

In gleicher Weise können zur Bildung des momentlosen Verhältnisses $\beta_{ml}$ oder des momentbeaufschlagten Verhältnisses $\beta_m$ die Abstände bestimmter Flanken der ersten Rechtecksignale zu den benachbarten gleichsinnigen oder benachbarten gegensinnigen Flanken der zweiten Rechtecksignale aufsummiert werden.

Bei sehr großer Drehmomentbeaufschlagung des Rotationskörpers kann dessen Tordierung dazu führen, daß ein Abstand $\alpha_m$ über das Ende des ihm zugeordneten Abstands $T_m$ hinaus in den nächstfolgenden Abstand $T_{m1}$ hinein reicht. Dies würde zu einer falschen Ermittlung des Drehmoments führen. Um eine solche falsche Drehmomentermittlung zu vermeiden, können bei Bildung des momentlosen Verhältnisses $\beta_{ml}$ die Abstände $\alpha_{ml}$ bestimmter Flanken der zweiten Rechtecksignale mit einem bestimmten vorgegebenen Flankenabstand $\alpha_{max}$ verglichen werden und bei Erkennung von $\alpha_{ml} > \alpha_{max}$ der Meßzyklus abgebrochen und ein neuer Meßzyklus begonnen werden, bei dem anstatt der Abstände $\alpha_{ml}$ die Abstände $\alpha_{ml}'$ aufsummiert werden, deren Anfang dem Anfang von $\alpha_{ml}$ entspricht und deren Enden die den Enden der Abstände $\alpha_{ml}$ vorhergehenden gegensinnigen Flanken der zweiten Rechtecksignale sind.

Um bei Stillstand oder nahezu Stillstand des Rotationskörpers nach einer Drehmomenterfassung eine weitere Drehmomenterfassung zu vermeiden, kann nach einem Beginn eines Meßzyklus zur Bestimmung des Drehmoments die momentane Drehzahl oder Winkelgeschwindigkeit des Rotationskörpers erfaßt und mit einem bestimmten Grenzwert der Drehzahl oder der Winkelgeschwindigkeit verglichen werden und bei Unterschreitung des Grenzwerts der Meßzyklus abgebrochen werden. Sobald die Winkelgeschwindigkeit oder die Drehzahi den bestimmten Grenzwert wieder überschreitet, erfolgt sofort mit der nächst folgend erfaßten bestimmten Flanke der ersten Rechtecksignale wieder ein Start eines Meßzyklus.

Damit der erfaßte Drehmomentverlauf von einem Beobachter erfaßbar ist, kann das bestimmte Drehmoment auf einer Anzeige angezeigt werden.

Darüber hinaus ist es zur weiteren Informationsvermittlung von Vorteil, wenn außer dem Drehmoment weitere aus dem Drehmoment ableitbare Größen auf der Anzeige angezeigt werden.

In einer einfachen Ausgestaltung besteht eine Vorrichtung zur Durchführung des Verfahrens zur Bestimmung des auf einen um eine Drehachse drehbar antreibbaren Rotationskörpers, insbesondere auf die Tretlagerwelle eines Fahrrads ausgeübten Drehmoments, mit einem ersten und einem zweiten Meßgeber , die an dem Rotationskörper in axialem Abstand oder radialem Abstand zueinander angeordnet sind und aus den Rotationskörper radial umschließenden Ringen aus alternierend unterschiedliches Signalverhalten aufweisenden Feldern bestehen, wobei die Anzahl der Felder beider Ringe gleich ist, mit einem dem ersten Meßgeber zugeordneten ersten Meßaufnehmer und einem dem zweiten Meßgeber zugeordneten zweiten Meßaufnehmer, die beide Ausgangssignale liefern, aus denen erste und zweite Rechtecksignale gebildet werden, wobei aus den Abständen von Flanken der ersten und zweiten Rechtecksignale über einer vollen Umdrehung des Rotationskörpers das durchschnittliche Drehmoment bestimmt wird, darin, daß die alternierend unterschiedliches Signalverhalten aufweisenden Felder unterbrechungslose Ringe bilden und daß die von dem ersten und zweiten Meßaufnehmer erfaßten Signale einer elektronischen Rechnereinheit zugeführt werden, die Speicher zur Speicherung des Speicherung des momentlosen Verhältnisses $\beta_{ml}$ und/oder der Kalibrierkonstante k und/oder des bestimmten Grenzwerts der Drehzahl oder der Winkelgeschwindigkeit des Rotationskörpers und oder des bestimmten Flankenabstands $\alpha_{max}$ aufweist, und von der ein dem zu bestimmenden Drehmoment entsprechendes Ausgangssignal erzeugbar ist.
Zur Ablesbarkeit der ermittelten Drehmomentwerte kann von dem Ausgangssignal der Rechnereinheit eine Anzeigeeinheit ansteuerbar sein.

Ist die elektronische Rechnereinheit ein Microcontroler oder Microcomputer, so ist dies bauraumsparend.

Grundsätzlich können die ersten und zweiten Meßgeber und Meßaufnehmer nach den verschiedensten Verfahren wie z.B. optischen, kapazitiven oder induktiven Verfahren arbeiten. Auch ist es durchaus möglich, daß die ersten Meßgeber und Meßaufnehmer nach einem anderen Verfahren als die zweiten Meßgeber und Meßaufnehmer arbeiten. Eine vorteilhafte Ausbildung besteht dabei aber darin, daß der erste und/oder der zweite Meßgeber aus optisch unterschiedliches Signalverhalten aufweisenden Feldern und der erste und/oder der zweite Meßaufnehmer optisch unterschiedliches Signalverhalten erfassende Aufnehmer sind.

Dabei können je nach vorhandenem Bauraum der erste und/oder der zweite Meßgeber aus einer Meßscheibe oder einem Meßzylinder bestehen, die oder der die Felder unterschiedlichen Signalverhaltens auf ihrer radialen planen Fläche oder auf ihrer zylindrischen Mantelfläche aufweisen.

Die Felder können unterschiedliches Reflexverhalten aufweisen, was z.B. dadurch erreicht werden kann, daß die Felder alternierend hohe und niedrige Reflexion aufweisen.

Eine andere Möglichkeit besteht darin, daß die Felder alternierend durch Schlitze und Blendenabschnitte der Meßscheibe gebildet sind.

Ausführungsbeispiele der Erfindung sind in der Zeichnung dargestellt und werden im folgenden näher beschrieben. Es zeigen

Figur 1          ein erstes Ausführungsbeispiel einer Vorrichtung zur Bestimmung des auf einen um eine Drehachse drehbar antreibbaren Rotationskörpers ausgeübten Drehmoments in perspektivischer Ansicht

Figur 2          ein zweites Ausführungsbeispiel einer Vorrichtung zur Bestimmung des auf einen um eine Drehachse drehbar antreibbaren Rotationskörpers ausgeübten Drehmoments in der Seitenansicht

Figur 3          die Vorrichtung nach Figur 2 im Schnitt

Figur 4 a        ein Signaldiagramm der ersten Rechtecksignale über der Zeit

Figur 4b         ein dem Signaldiagramm nach Figur 4 a zugeordnetes Signaldiagramm der zweiten Rechtecksignale über der Zeit

Figur 5          ein zweites Signaldiagramm der ersten Rechtecksignale über der Zeit

Figur 6a         ein drittes Signaldiagramm der ersten Rechtecksignale über der Zeit

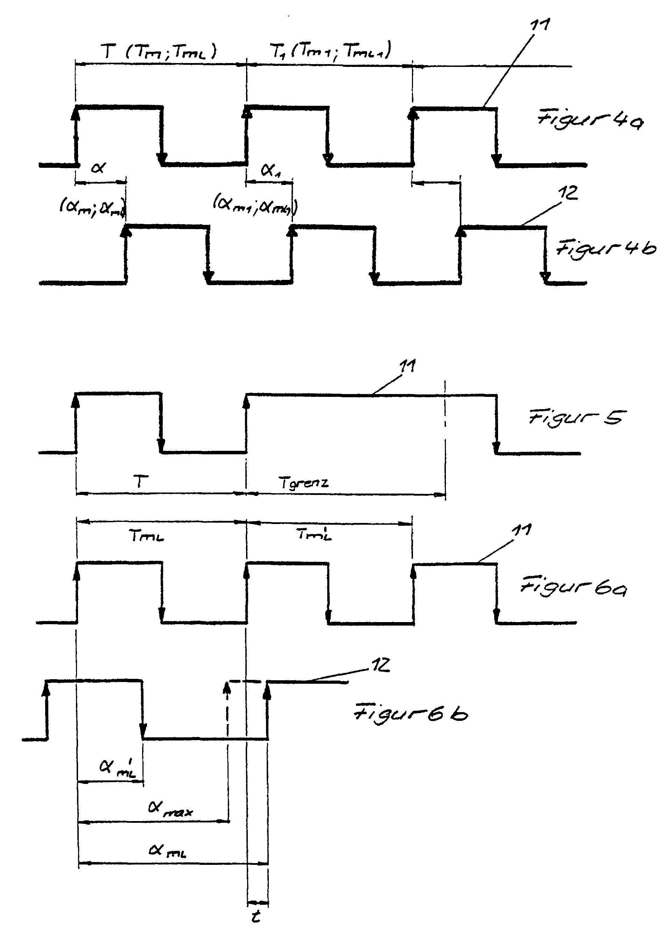

Figur 6 b          ein dem Signaldiagramm nach Figur 6 a zugeordnetes Signaldiagramm der zweiten Rechtecksignale über der Zeit

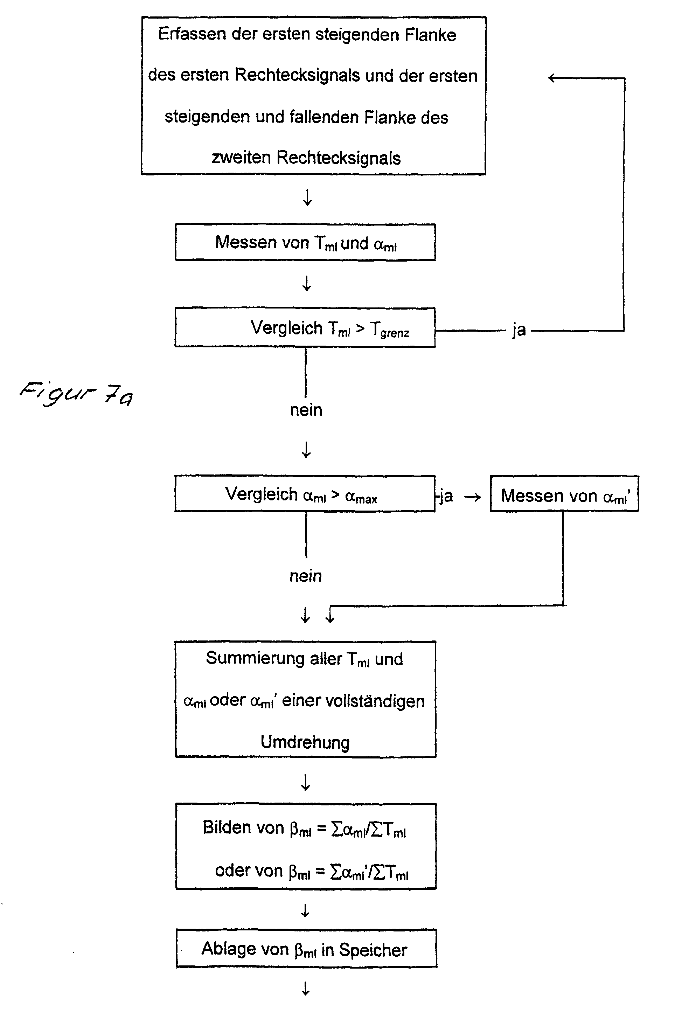

Figur 7 a und 7 b  ein Ablaufdiagramm eines Verfahrens zur Bestimmung des auf einen um eine Drehachse drehbar antreibbaren Rotationskörpers ausgeübten Drehmoments

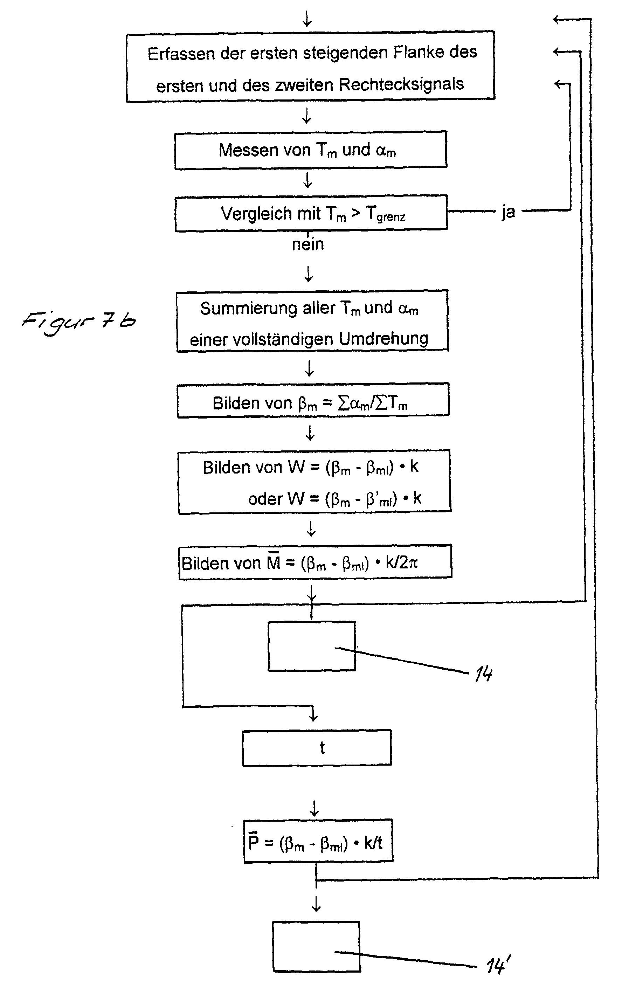

Figur 8            ein Diagramm der momentlosen Verhältnisse $\beta_{ml}$ addiert mit den momentbeaufschlagten Verhältnissen $\beta_m$ über einer vollständigen Umdrehung des Rotationskörpers

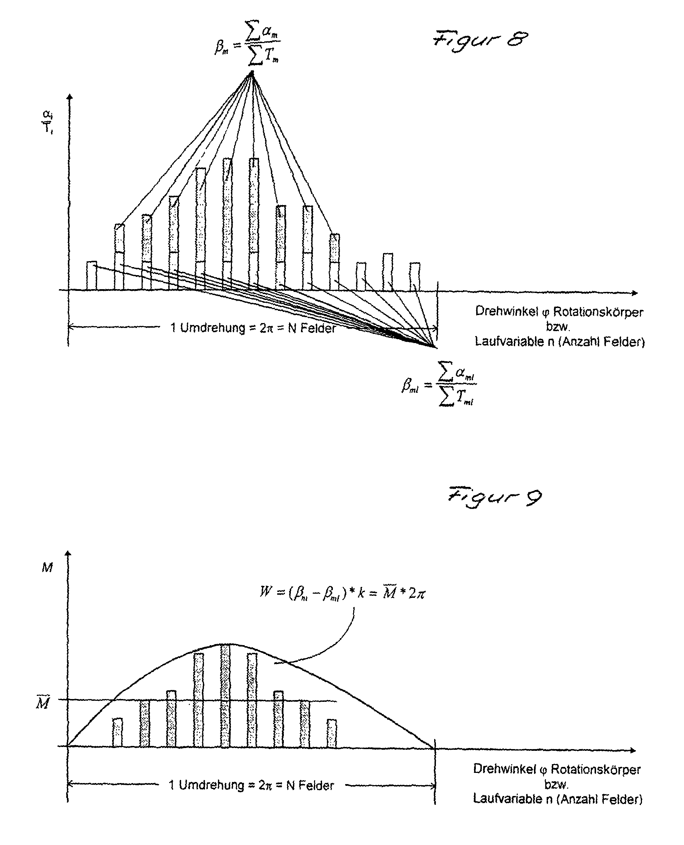

Figur 9            ein Diagramm der Drehmomente über einer vollständigen Umdrehung des Rotationskörpers.

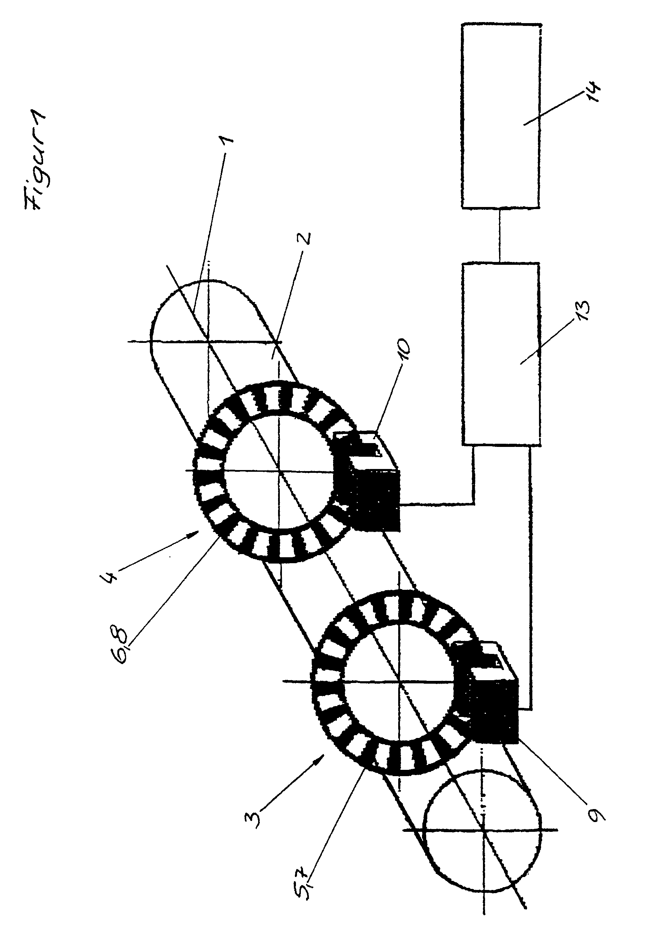

Die Vorrichtungen der Figuren 1 bis 3 weisen um eine Drehachse 1 drehbar antreibbare Rotationskörper 2 auf, wobei in Figur 1 der Rotationskörper die Tretlagerwelle eines Fahrrades ist.

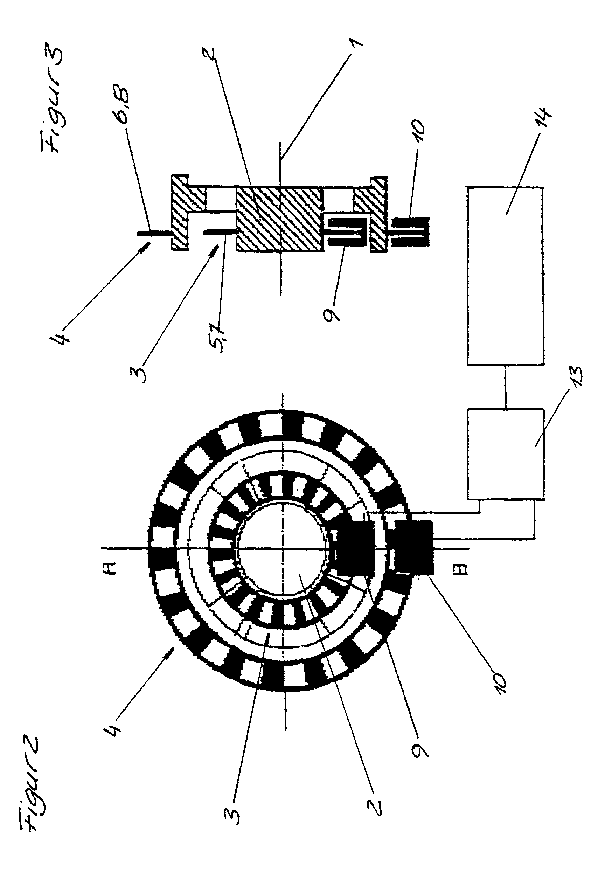

Auf dem Rotationskörper 2 sind in Figur 1 in axialem Abstand zueinander und in den Figuren 2 und 3 in radialem Abstand zueinander ein erster Meßgeber 3 und ein zweiter Meßgeber 4 drehfest angeordnet. Die Meßgeber 3 und 4 bestehen aus radial zur Drehachse1 ausgerichteten umlaufenden Meßscheiben 5 und 6, auf denen den Rotationskörper radial umschließende unterbrechungslose Ringe 7 und 8 aus alternierend hellen und dunklen Feldern aufgebracht sind. Die Anzahlen der Felder beider Ringe 7 und 8 sind gleich.

Jedem der Meßgeber 3 und 4 ist ein feststehender optischer Meßaufnehmer 9 und 10 zugeordnet, durch die entsprechend der jeweiligen Vorbeibewegung der hellen und dunklen Felder der Ringe 7 und 8 Rechtecksignale erzeugt werden.

Der Meßaufnehmer 9 erzeugt erste Rechtecksignale 11 und der zweite Meßaufnehmer 10 zweite Rechtecksignale 12. Beide Rechtecksignale werden einem Microcontroler 13 zugeführt und in diesem das auf den Rotationskörper 2 einwirkende Drehmoment bestimmt. Ein entsprechendes Ausgangssignal des Microcontrolers 13 wird einer Anzeige 14 zugeführt und als Drehmomentwert angezeigt.

In Figur 4 a ist ein Signaldiagramm der vom ersten Meßaufnehmer 9 erzeugten ersten Rechtecksignale 11 dargestellt, bei dem die Abstände zwischen den einander folgenden steigenden Flanken die Flankenabstände T sind. Die vom zweiten Meßaufnehmer 10 erzeugten, dem Signaldiagramm 4 a zugeordneten zweiten Rechtecksignale 12 sind in dem Signaldiagramm in Figur 4 b dargestellt.

Die Abstände zwischen den steigenden Flanken der Rechtecksignale 11 und den nächstfolgenden steigenden Flanken der Rechtecksignale 12 sind die Flankenabstände $\alpha$.

Wie im weiteren noch beschrieben wird, werden zur Drehmomentermittlung alle Flankenabstände T und alle Flankenabstände $\alpha$ einer vollen Umdrehung des Rotationskörpers 2 aufsummiert.

Ist entsprechend Figur 5 die Drehbewegung des Rotationskörpers 2 so gering, daß ein Flankenabstand T größer als ein vorgegebener maximaler Flankenabstand $T_{grenz}$ ist, so wird dies von dem Microcontroler 13 erkannt und ein begonnener Meßzyklus abgebrochen.

Ein neuer Meßzyklus kann dann sofort mit der nächsten steigenden Flanke wieder beginnen, so daß keine Verzögerung erfolgt.

Bei den einander zugeordneten Signaldiagrammen der ersten und zweiten Rechtecksignale 11 und 12 in den Figuren 6 a und 6 b wäre aufgrund eines sehr hohen auf den Rotationskörper 2 einwirkenden Drehmoments die Torsion des Rotationskörpers 2 so groß, daß die auf eine steigende Flanke der ersten Rechtecksignale 11 folgende nächste steigende Flanke der zweiten Rechtecksignale 12 erst erzeugt würde, nachdem bereits vor einer Zeit $t_0$ eine weitere steigende Flanke der ersten Rechtecksignale 11 erzeugt wurde. Damit wäre aber keine brauchbare Drehmomentermittlung möglich.

Um dies zu vermeiden, erkennt der Microcontroler 13 bei Bildung des momentlosen Verhältnisses $\beta_{ml}$, wenn der Flankenabstand $\alpha_{ml}$ größer ist als ein bestimmter Flankenabstand $\alpha_{max}$. Ist dies der Fall, so wird dieser Meßzyklus abgebrochen und ein neuer Meßzyklus begonnen, bei dem nicht mehr der Flankenabstand $\alpha_{ml}$ zwischen einer steigenden Flanke des ersten Rechtecksignals 11 und der nächstfolgenden steigenden Flanke des zweiten Rechtecksignals 12 zur Bestimmung von $\beta_{ml}$ herangezogen wird, sondern der Abstand $\alpha_{ml}'$ zwischen einer steigenden Flanke des ersten Rechtecksignals 11 und der nächstfolgenden fallenden Flanke des zweiten Rechtecksignals 12.

In Figur 7 ist der Ablauf des Verfahrens zur Bestimmung des auf den um die Drehachse 1 drehbar antreibbaren Rotationskörpers 2 ausgeübten Drehmoments dargestellt. Dabei erfolgt zuerst ein Initialisierverfahren, in dem ein im wesentlichen momentloses Verhältnis $\beta_{ml}$ bei nicht momentbeaufschlagtem Rotationskörper 2 ermittelt wird. Vorzugsweise erfolgt dieses Initialisierverfahren nicht bei jeder Drehmomentermittlung, sondern nur bei der Erstinbetriebnahme der Vorrichtung. Der Wert des momentlosen Verhältnisses $\beta_{ml}$ wird dann in einem Speicher des Microcontrolers 13 abgelegt und ist für die zukünftigen Drehmomentermittlungen abrufbar. Zu Beginn des Meßzyklus des Initialisierverfahrens wird die erste steigende Flanke des ersten Rechtecksignals 11 erfaßt und der zeitliche Abstand $T_{ml}$ bis zur nächsten steigenden Flanke gemessen. Sodann erfolgt ein Vergleich des gemessenen Abstands $T_{ml}$ mit einem vor-

gegebenen und in einem Speicher des Microcontrolers 13 abgelegten maximalen zeitlichen Abstand $T_{grenz}$.

Ist $T_{ml}$ größer als $T_{grenz}$, wird der Meßzyklus abgebrochen und ein neuer Meßzyklus gestartet.

Zu Beginn des Meßzyklus wurde weiterhin der zeitliche Abstand $\alpha_{ml}$ zwischen der ersten steigenden Flanke des ersten Rechtecksignals 11 und der nächstfolgenden steigenden Flanke des zweiten Rechtecksignals 12 durch den Zähler des Microcontrolers 13 gemessen. Dieser zeitliche Abstand $\alpha_{ml}$ wird nun mit einem im Speicher des Microcontrolers 13 abgelegten maximalen Flankenabstand $\alpha_{max}$ verglichen.

Ist $\alpha_{ml} > \alpha_{max}$ wird der Meßzyklus abgebrochen und ein neuer Meßzyklus gestartet, bei dem anstatt $\alpha_{ml}$ nun der Abstand $\alpha_{ml}'$ gemessen wird, welches der zeitliche Abstand zwischen der ersten steigenden Flanke des ersten Rechtecksignals 11 und der der nächstfolgenden steigenden Flanke des zweiten Rechtecksignals 12 vorhergehenden fallenden Flanke des zweiten Rechtecksignals 12 ist.

Sowohl alle während der einen vollständigen oder der bestimmten Anzahl von vollständigen Umdrehungen gemessenen $T_{ml}$ als auch der gemessenen $\alpha_{ml}$ oder bei Überschreitung von $\alpha_{max}$ alle gemessenen $\alpha_{ml}'$ werden anschließend zur Summe $T_{ml}$ und zur Summe $\alpha_{ml}$ aufsummiert. Aus diesen Summen wird im Microcontroler 13 das momentlose Verhältnis

$$\beta_{ml} = (\alpha_{ml1} + \alpha_{ml2} + .... \alpha_{mln})/(T_{ml1} + T_{ml2} +.... T_{mln}) = \Sigma\alpha_{mln}/\Sigma T_{mln}$$

gebildet und in einem Speicher des Microcontroiers abgelegt.

Nun erfolgt wie bei späteren Drehmomentermittlungen mit Ausnahme des Vergleichs mit $\alpha_{max}$ immer nach den gleichen Verfahrensschritten eine Ermittlung eines momentbeaufschlagten Verhältnisses.

$$\beta_{m} = (\alpha_{m1} + \alpha_{m2} + .... \alpha_{mn})/(T_{m1} + T_{m2} +.... T_{mn}) = \Sigma\alpha_{mn}/\Sigma T_{mn}$$

an dem mit dem zu ermittelten Drehmoment beaufschlagten Rotationskörper 2.

In Figur 8 sind in einem Diagramm über einer vollständigen Umdrehung des Rotationskörpers 2 als Balken die momentlosen Verhältnisse $\beta_{ml}$ addiert mit den momentbeaufschlagten Verhältnissen $\beta_{m}$ für die einzelnen Felder der Ringe 7 und 8 des Rotationskörpers 2 aufgetragen. Dabei entsprechen die dunkel ausgefüllten Balkenteile $\beta_{m}$ und die hellen Balkenteils $\beta_{ml}$.

Aus dem im Speicher abgelegten $\beta_{ml}$ und dem ermittelten $\beta_{m}$ wird im Microcontroler 13 entsprechend der Beziehung

$$W = \int_{0}^{2\pi} Md\varphi = \overline{M} \cdot 2\pi \approx (\beta_{m} - \beta_{ml}) \cdot k$$

die an dem Rotationskörper wirkende Arbeit bestimmt. k ist dabei eine Kalibrierkonstante, die separat ermittelt und in einem Speicher des Microcontrolers 13 abgelegt wurde.

Aus der Arbeit wird vom Microcontroler 13 das durchschnittliche Drehmoment einer oder mehrerer vollständiger Umdrehungen mit Gleichung

$$\overline{M} = W/2\pi \approx (\beta_{m} - \beta_{ml}) \cdot k/2\pi$$

berechnet und eine entsprechendes Signal der Anzeige 14 zu deren Ansteuerung zugeleitet, sowie ein neuer Meßzyklus ausgelöst.

In Figur 9 sind in einem Diagramm ebenfalls über einer vollständigen Umdrehung des Rotationskörpers 2 als Balken die Drehmomente für die einzelnen Felder des Rotationskörpers 2 aufgetragen und von einer Hüllkurve umschlossen. Das durchschnittliche Drehmoment M ergibt sich aus diesen einzelnen Drehmomenten.

Wie dem Ablaufdiagramm in Figur 7 b zu entnehmen ist, kann darüber hinaus auch die durchschnittliche Leistung ermittelt werden.

Aus den erfaßten zeitlichen Abständen $T_{m}$ ergibt sich auch die Zeit t der einen oder mehreren vollständigen Umdrehungen des Rotationskörpers. Daraus wird die durchschnittliche Leistung nach der Gleichung

$$\overline{P} = W/t \approx (\beta_{m} - \beta_{ml}) \cdot k/t$$

ermittelt, ein entsprechendes Signal der Anzeige 14' zu deren Ansteuerung zugeleitet.

**Patentansprüche**

1.  Verfahren zur Bestimmung des auf einen um eine Drehachse drehbar antreibbaren Rotationskörpers, insbesondere auf die Tretlagerwelle eines Fahrrads ausgeübten Drehmoments, mit einem ersten und einem zweiten Meßgeber, die an dem Rotationskörper in axialem Abstand oder radialem Abstand zueinander angeordnet sind und aus den Rotationskörper radial umschließenden Ringen aus alternierend unterschiedliches Signalverhalten aufweisenden Feldern bestehen, wobei die Anzahl der Felder beider Ringe gleich ist, mit einem dem ersten Meßgeber zugeordneten ersten Meßaufnehmer und einem dem zweiten Meßgeber zugeordneten zweiten Meßaufnehmer, die beide Ausgangssignale liefern, aus denen erste und zweite Rechtecksignale gebildet werden, wobei aus den Abständen von Flanken der ersten und zweiten Rechtecksignale über einer vollen Umdrehung des Rotationskörpers das durchschnittliche Drehmoment bestimmt wird, **dadurch gekennzeichnet, daß** die alternierend unterschiedliches Signalverhalten aufweisenden Felder unterbrechungslose Ringe (7, 8) bilden, daß über eine oder mehrere vollständige Umdrehungen des unbelasteten, drehmomentlosen Rotationskörpers (2) die Flankenabstände $T_{ml}$ bestimmter Flanken der ersten Rechtecksignale (11) und die Abstände $\alpha_{ml}$ bestimmter Flanken der zweiten Rechtecksignale (12) zu bestimmten Flanken der ersten Rechtecksignale (11) jeweils aufsummiert und das momentlose Verhältnis

$$\beta_{ml} = (\alpha_{ml1} + \alpha_{ml2} + \dots \alpha_{mln})/(T_{ml1} + T_{ml2} + \dots T_{mln}) = \Sigma\alpha_{mln}/\Sigma T_{mln}$$

gebildet wird, daß über eine oder mehrere vollständige Umdrehungen des mit dem zu bestimmenden Drehmoment belasteten Rotationskörpers (2) die Flankenabstände $T_m$ bestimmter Flanken der ersten Rechtecksignale (11) und die Abstände $\alpha_m$ bestimmter Flanken der zweiten Rechtecksignale (12) zu bestimmten Flanken der ersten Rechtecksignale (12) jeweils aufsummiert und das momentbeaufschlagte Verhältnis

$$\beta_m = (\alpha_{m1} + \alpha_{m2} + \dots \alpha_{mn})/(T_{m1} + T_{m2} + \dots T_{mn}) = \Sigma\alpha_{mn}/\Sigma T_{mn}$$

gebildet wird, daß die Arbeit an dem momentbeaufschlagten Rotationskörper (2) bestimmt wird aus der Gleichung

$$W = \int_0^{2\pi} M d\varphi = \overline{M} \cdot 2\pi \approx (\beta_m - \beta_{ml}) \cdot k,$$

wobei k eine Kalibrierkonstante und $\varphi$ der Drehwinkel des Rotationskörpers (2) ist und daß das auf den Rotationskörper (2) ausgeübte durchschnittliche Drehmoment aus der Gleichung

$$\overline{M} = W/2\pi \approx (\beta_m - \beta_{ml}) \cdot k/2\pi$$

bestimmt wird.

2.  Verfahren nach Anspruch 1, **dadurch gekennzeich**n e t, daß nach Ablauf eines Meßzykluses selbsttätig ein oder mehrere weitere Meßzyklen durchgeführt werden.

3.  Verfahren nach einem der vorhergehenden Ansprüche, **dadurch gekennzeichnet, daß** die Kalibrierkonstante k und/oder das momentlose Verhältnis $\beta_{ml}$ in einem separaten Verfahren ermittelt werden und als konstante Speicherwerte für jede Drehmomentbestimmung abrufbar gespeichert sind.

4.  Verfahren nach einem der vorhergehenden Ansprüche, **dadurch gekennzeichnet, daß** zur Bildung des momentlosen Verhältnisses $\beta_{ml}$ oder des momentbeaufschlagten Verhältnisses $\beta_m$ die Flankenabstände $T_{ml}$ oder $T_m$ der benachbarten gleichsinnigen oder der benachbarten gegensinnigen Flanken der ersten Rechtecksignale (11) aufsummiert werden.

5. Verfahren nach einem der vorhergehenden Ansprüche, **dadurch gekennzeichnet, daß** zur Bildung des momentlosen Verhältnisses $\beta_{ml}$ oder des momentbeaufschlagten Verhältnisses $\beta_m$ die Abstände $\alpha_{ml}$ oder $\alpha_m$ bestimmter Flanken der ersten Rechtecksignale (11) zu den benachbarten gleichsinnigen oder benachbarten gegensinnigen Flanken der zweiten Rechtecksignale (12) aufsummiert werden.

6. Verfahren nach einem der vorhergehenden Ansprüche, **dadurch gekennzeichnet, daß** bei Bildung des momentlosen Verhältnisses $\beta_{ml}$ die Abstände $\alpha_{ml}$ bestimmter Flanken der zweiten Rechtecksignale (12) mit einem bestimmten vorgegebenen Flankenabstand $\alpha_{max}$ verglichen werden und daß bei Erkennung von $\alpha_{ml} > \alpha_{max}$ der Meßzyklus abgebrochen und ein neuer Meßzyklus begonnen wird, bei dem anstatt der Abstände $\alpha_{ml}$ die Abstände $\alpha_{ml}'$ aufsummiert werden, deren Anfang dem Anfang von $\alpha_{ml}$ entspricht und deren Enden die den Enden der Abstände $\alpha_{ml}$ vorhergehenden gegensinnigen Flanken der zweiten Rechtecksignale (12) sind.

7. Verfahren nach einem der vorhergehenden Ansprüche, **dadurch gekennzeichnet, daß** nach einem Beginn eines Meßzyklus zur Bestimmung des Drehmoments die momentane Drehzahl oder Winkelgeschwindigkeit des Rotationskörpers (2) erfaßt und mit einem bestimmten Grenzwert der Drehzahl oder der Winkelgeschwindigkeit verglichen wird und daß bei Unterschreitung des Grenzwerts der Meßzyklus abgebrochen wird.

8. Verfahren nach einem der vorhergehenden Ansprüche, **dadurch gekennzeichnet, daß** das bestimmte Drehmoment auf einer Anzeige (14) angezeigt wird.

9. Verfahren nach Anspruch 8, **dadurch gekennzeichnet, daß** außer dem Drehmoment weitere aus dem Drehmoment ableitbare Größen auf der Anzeige (14) angezeigt werden.

10. Vorrichtung zur Durchführung des Verfahrens zur Bestimmung des auf einen um eine Drehachse drehbar antreibbaren Rotationskörpers, insbesondere auf die Tretlagerwelle eines Fahrrads ausgeübten Drehmoments, nach einem der Ansprüche 1 bis 9,mit einem ersten und einem zweiten Meßgeber, die an dem Rotationskörper in axialem Abstand oder radialem Abstand zueinander angeordnet sind und aus den Rotationskörper radial umschließenden Ringen aus alternierend unterschiedliches Signalverhalten aufweisenden Feldern bestehen, wobei die Anzahl der Felder beider Ringe gleich ist, mit einem dem ersten Meßgeber zugeordneten ersten Meßaufnehmer und einem dem zweiten Meßgeber zugeordneten zweiten Meßaufnehmer, die beide Ausgangssignale liefern, aus denen erste und zweite Rechtecksignale gebildet werden, wobei aus den Abständen von Flanken der ersten und zweiten Rechtecksignale über einer vollen Umdrehung des Rotationskörpers das durchschnittliche Drehmoment bestimmt wird, **dadurch gekennzeichnet, daß** die alternierend unterschiedliches Signalverhalten aufweisenden Felder unterbrechungslose Ringe (7, 8) bilden, daß die Vorrichtung mit einer elektronischen Rechnereinheit vorgesehen ist, und daß die von dem ersten und zweiten Meßaufnehmer (9, 10) erfaßten Signale der elektronischen Rechnereinheit zuführbar sind, die Speicher zur Speicherung des momentlosen Verhältnisses $\beta_{ml}$ und/oder der Kalibrierkonstante k und/oder des bestimmten Grenzwerts der Drehzahl oder der Winkelgeschwindigkeit des Rotationskörpers (2) und/oder des bestimmten Flankenabstands $\alpha_{max}$ und Mittel zur Durchführung jedes einzelnen Schrittes der Auswertung nach den Ansprüchen 1-9 aufweist, damit von der elektronischen Rechnereinheit ein dem zu bestimmenden Drehmoment entsprechendes Ausgangssignal erzeugbar ist.

11. Vorrichtung nach Anspruch 10, **dadurch gekennzeichnet, daß** von dem Ausgangssignal der Rechnereinheit eine Anzeigeeinheit ansteuerbar ist.

12. Vorrichtung nach einem der Ansprüche 10 und 11, **dadurch gekennzeichnet, daß** die elektronische Rechnereinheit ein Microcontroler (13) oder ein Microcomputer ist.

13. Vorrichtung nach Anspruch 10, **dadurch gekennzeichnet, daß** der erste und/oder der zweite Meßgeber (3, 4) aus optisch unterschiedliches Signalverhalten aufweisenden Feldern und der erste und/oder der zweite Meßaufnehmer (9, 10) optisch unterschiedliches Signalverhalten erfassende Aufnehmer sind.

14. Vorrichtung nach Anspruch 13, **dadurch gekennzeichnet, daß** der erste und/oder der zweite Meßgeber aus einer Meßscheibe (5, 6) oder einem Meßzylinder besteht, die oder der die Felder unterschiedlichen Signalverhaltens auf ihrer radialen planen Fläche oder auf ihrer zylindrischen Mantelfläche aufweisen.

15. Vorrichtung nach Anspruch 14, **dadurch gekennzeichnet, daß** die Felder unterschiedliches Reflexverhalten aufweisen.

**16.** Vorrichtung nach Anspruch 15, **dadurch gekennzeichnet, daß** die Felder alternierend hohe und niedrige Reflexion aufweisen.

**Claims**

**1.** Method for determining the torque exerted on a body of revolution capable of being driven rotatably about an axis of rotation, in particular on the bottom bracket bearing shaft of a bicycle, with a first and a second measurement transmitter which are arranged on the body of revolution at an axial distance or a radial distance from one another and consist of rings radially surrounding the body of revolution and composed of fields having an alternately different signal behaviour, the number of fields of the two rings being identical, with a first measurement sensor assigned to the first measurement transmitter and with a second measurement sensor assigned to the second measurement transmitter, both of the said measurement sensors delivering output signals, from which first and second square-wave signals are formed, the average torque being determined from the intervals between edges of the first and second square-wave signals over one complete revolution of the body of revolution, **characterized in that** the fields having an alternately different signal behaviour form uninterrupted rings (7, 8), **in that** the edge intervals $T_{ml}$ of specific edges of the first square-wave signals (11) and the intervals $\alpha_{ml}$ of specific edges of the second square-wave signals (12) in relation to specific edges of the first square-wave signals (11) are summed up in each case over one or more complete revolutions of the non-loaded torqueless body of revolution (2), and the torqueless ratio

$$\beta_{ml}=(\alpha_{ml1}+\alpha_{ml2}+...\alpha_{mln})/(T_{ml1}+T_{ml2}+...T_{mln})=\Sigma\alpha_{mln}/\Sigma T_{mln}$$

is formed, **in that** the edge intervals $T_m$ of specific edges of the first square-wave signals (11) and the intervals $a_m$ of specific edges of the second square-wave signals (12) in relation to specific edges of the first square-wave signals (12) are summed up in each case over one or more complete revolutions of the body of revolution (2) loaded with the torque to be determined, and the torque loaded ratio

$$\beta_m = (\alpha_{m1} + \alpha_{m2} + .... \alpha_{mn})/(T_{m1} + T_{m2} + ... T_{mn})=\Sigma\alpha_{mn}/\Sigma T_{mn}$$

is formed, **in that** the work on the torque-loaded body of revolution (2) is determined from the equation

$$W = \int_{O}^{2\pi} Md\varphi = \overline{M} \cdot 2\pi \approx (\beta_m - \beta_{ml}). k,$$

k being a calibration constant and $\varphi$ being the angle of rotation of the body of revolution (2), and **in that** the average torque exerted on the body of revolution (2) is determined from the equation

$$\overline{M} = W/2\pi \approx (\beta_m - \beta_{m1}).k/2\pi.$$

**2.** Method according to Claim 1, **characterized in that**, after a measurement cycle has elapsed, one or more further measurement cycles are carried out automatically.

**3.** Method according to one of the preceding claims, **characterized in that** the calibration constant k and/or the torqueless ratio $\beta_{ml}$ are determined in a separate method and are stored retrievably as constant storage values for each torque determination.

**4.** Method according to one of the preceding claims, **characterized in that**, to form the torqueless ratio $\beta_{ml}$ or the torque-loaded ratio $\beta_m$, the edge intervals $T_{ml}$ or $T_m$ of the adjacent codirectional or of the adjacent contradirectional edges of the first square-wave signals (11) are summed up.

**5.** Method according to one of the preceding claims, **characterized in that**, to form the torqueless ratio $\beta_{ml}$ or the torque-loaded ratio $\beta_m$, the intervals $\alpha_{ml}$ or $\alpha_m$ of specific edges of the first square-wave signals (11) in relation to the adjacent codirectional or adjacent contradirectional edges of the second square-wave signals (12) are summed up.

6. Method according to one of the preceding claims, **characterized in that**, during the formation of the torqueless ratio $\beta_{ml}$, the intervals $\alpha_{ml}$ of specific edges of the second square-wave signals (12) are compared with a specific predetermined edge interval $\alpha_{max}$, and **in that**, when $\alpha_{ml} > \alpha_{max}$ is detected, the measurement cycle is discontinued and a new measurement cycle is commenced, during which, instead of the intervals $\alpha_{ml}$, the intervals $\alpha_{ml}'$ are summed up, the start of which corresponds to the start of $\alpha_{ml}$ and the ends of which are those contradirectional edges of the second square-wave signals (12) which precede the ends of the intervals $\alpha_{ml}$.

7. Method according to one of the preceding claims, **characterized in that**, after the commencement of a measurement cycle for determining the torque, the instantaneous rotational speed or angular speed of the body of revolution (2) is detected and compared with a specific limit value of the rotational speed or of the angular speed, and **in that**, in the case being undershot of the limit value, the measurement cycle is discontinued.

8. Method according to one of the preceding claims, **characterized in that** the specific torque is indicated on an indicator (14).

9. Method according to Claim 8, **characterized in that**, in addition to the torque, further variables capable of being derived from the torque are indicated on the indicator (14).

10. Device for carrying out the method for determining the torque exerted on a body of revolution capable of being driven rotatably about an axis of rotation, in particular on the bottom bracket bearing shaft of a bicycle, according to one of Claims 1 to 9, with a first and a second measurement transmitter which are arranged on the body of revolution at an axial distance or radial distance from one another and consist of rings radially surrounding the body of revolution and composed of fields having an alternately different signal behaviour, the number of fields of the two rings being identical, with a first measurement sensor assigned to the first measurement transmitter and with a second measurement sensor assigned to the second measurement transmitter, both of the said measurement sensors delivering output signals, from which first and second square-wave signals are formed, the average torque being determined from the intervals of edges of the first and second square-wave signals over one complete revolution of the body of revolution, **characterized in that** the fields having an alternately different signal behaviour form uninterrupted rings (7, 8), **in that** the device is provided with an electronic computer unit, and **in that** the signals detected by the first and second measurement sensors (9, 10) are capable of being fed to the electronic computer unit which has memories for storing the torqueless ratio $\beta_{ml}$ and/or the calibration constant k and/or the specific limit value of the rotational speed or angular speed of the body of revolution (2) and/or the specific edge interval $\alpha_{max}$ and means for carrying out each individual step of the evaluation according to Claims 1 - 9, so that an output signal corresponding to the torque to be determined can be generated by the electronic computer unit.

11. Device according to Claim 10, **characterized in that** an indicator unit is capable of being activated by the output signal from the computer unit.

12. Device according to one of Claims 10 and 11, **characterized in that** the electronic computer unit is a microcontroller (13) or a microcomputer.

13. Device according to Claim 10, **characterized in that** the first and/or the second measurement transmitter (3, 4) consist of fields having an optically different signal behaviour and the first and/or the second measurement sensor (9, 10) are sensors detecting an optically different signal behaviour.

14. Device according to Claim 13, **characterized in that** the first and/or the second measurement transmitter consists of a measurement disk (5, 6) or a measurement cylinder which have the fields with a different signal behaviour on their radial plane surface or on their cylindrical outer surface.

15. Device according to Claim 14, **characterized in that** the fields have a different reflex behaviour.

16. Device according to Claim 15, **characterized in that** the fields have alternating high and low reflection.

**Revendications**

1. Procédé pour la détermination du couple exercé sur un corps rotatif pouvant être entraîné en rotation autour d'un axe de rotation, en particulier sur un arbre de pédalier d'une bicyclette, avec un premier et un deuxième générateurs de mesure qui sont disposés sur le corps rotatif à une distance axiale ou radiale l'un de l'autre et se composent d'anneaux entourant radialement le corps rotatif constitués de champs présentant un comportement de signal alternativement différent, le nombre des champs des deux anneaux étant égal, avec un premier transducteur associé au premier générateur de mesure et un deuxième transducteur associé au deuxième générateur de mesure, qui fournissent tous deux des signaux de sortie à partir desquels sont formés des premiers et deuxièmes signaux rectangulaires, le couple moyen étant déterminé à partir des distances des flancs des premiers et deuxièmes signaux rectangulaires sur une rotation complète du corps rotatif, **caractérisé en ce que** les champs présentant un comportement de signal alternativement différent forment des anneaux ininterrompus (7, 8), **en ce que** les distances des flancs $T_{ml}$ entre des flancs déterminés des premiers signaux rectangulaires (11) et les distances $\alpha_{ml}$ de flancs déterminés des deuxièmes signaux rectangulaires (12) aux flancs déterminés des premiers signaux rectangulaires (11) sont à chaque fois additionnées sur une ou plusieurs rotations complètes du corps rotatif (2) non sollicité, sans couple, et le rapport sans couple

$$\beta_{m1} = (\alpha_{ml1} + \alpha_{ml2} + ... \alpha_{mln}) / (T_{ml1} + T_{ml2} + ... T_{mln})$$

$$= \Sigma\alpha_{mln}/\Sigma T_{mln}$$

est formé, **en ce que** les distances des flancs $T_m$ entre des flancs déterminés des premiers signaux rectangulaires (11) et les distances $\alpha_m$ de flancs déterminés des deuxièmes signaux rectangulaires (12) aux flancs déterminés des premiers signaux rectangulaires (11) sont à chaque fois additionnées sur une ou plusieurs rotations complètes du corps rotatif (2) sollicité avec le couple à déterminer, et le rapport sollicité par le couple

$$\beta_m = (\alpha_{m1} + \alpha_{m2} + ... \alpha_{mn}) / (T_{m1} + T_{m2} + ... T_{mn}) = \Sigma\alpha_{mn}/\Sigma T_{mn}$$

est formé, **en ce que** le travail sur le corps rotatif (2) sollicité par le couple est déterminé à partir de l'équation

$$W = \int_{0}^{2\pi} Md\varphi = \overline{M} \cdot 2\pi \approx (\beta_m - \beta_{ml}) \cdot k,$$

où k est une constante de calibrage et $\varphi$ l'angle de rotation du corps rotatif (2) et **en ce que** le couple moyen exercé sur le corps rotatif (2) est déterminé à partir de l'équation

$$\overline{M} = W/2\pi \approx (\beta_m - \beta_{ml}) \cdot k/2\pi$$

2. Procédé selon la revendication 1, **caractérisé en ce qu'**après le déroulement d'un cycle de mesure, un ou plusieurs cycles de mesure supplémentaires sont réalisés automatiquement.

3. Procédé selon l'une quelconque des revendications précédentes, **caractérisé en ce que** la constante de calibrage k et/ou le rapport $\beta_{ml}$ sans couple sont déterminés au cours d'un procédé distinct et sont stockés de manière rappelable en tant que valeurs de stockage constantes pour chaque détermination du couple.

4. Procédé selon l'une quelconque des revendications précédentes, **caractérisé en ce que** pour former le rapport $\beta_{ml}$ sans couple ou le rapport $\beta_m$ sollicité par le couple, les distances des flancs $T_{ml}$ ou $T_m$ des flancs voisins de même sens ou des flancs voisins de sens opposé des premiers signaux rectangulaires (11) sont additionnées.

5. Procédé selon l'une quelconque des revendications précédentes, **caractérisé en ce que** pour former le rapport $\beta_{ml}$ sans couple ou le rapport $\beta_m$ sollicité par le couple, les distances $\alpha_{ml}$ ou $\alpha_m$ de flancs déterminés des premiers signaux rectangulaires (11) aux flancs voisins de même sens ou aux flancs voisins de sens opposé des deuxièmes signaux rectangulaires (12) sont additionnées.

6. Procédé selon l'une quelconque des revendications précédentes, **caractérisé en ce que** lors de la formation du rapport $\beta_{ml}$ sans couple, les distances $\alpha_{ml}$ de flancs déterminés des deuxièmes signaux rectangulaires (12) sont comparées avec une distance de flanc déterminée prédéfinie $\alpha_{max}$ et **en ce que**, si l'on détecte que $\alpha_{ml} > \alpha_{max}$, le cycle de mesure est interrompu et un nouveau cycle de mesure est amorcé, dans lequel au lieu des distances $\alpha_{ml}$ on additionne les distances $\alpha_{ml}'$, dont le début correspond au début de $\alpha_{ml}$ et dont les fins sont les flancs de sens opposé des deuxièmes signaux rectangulaires (12) précédant les fins des distances $\alpha_{ml}$.

7. Procédé selon l'une quelconque des revendications précédentes, **caractérisé en ce qu'**après un début d'un cycle de mesure pour la détermination du couple, la vitesse rotationnelle instantanée ou la vitesse angulaire du corps rotatif (2) est détectée et comparée à une valeur limite déterminée de la vitesse rotationnelle ou de la vitesse angulaire et **en ce que** si la valeur limite est supérieure, le cycle de mesure est interrompu.

8. Procédé selon l'une quelconque des revendications précédentes, **caractérisé en ce que** le couple déterminé est indiqué sur un affichage (14).

9. Procédé selon la revendication 8, **caractérisé en ce qu'**en plus du couple, d'autres grandeurs pouvant être dérivées du couple sont indiquées sur l'affichage (14).

10. Dispositif pour mettre en oeuvre le procédé pour la détermination du couple exercé sur un corps rotatif pouvant être entraîné en rotation autour d'un axe de rotation, en particulier sur un arbre de pédalier d'une bicyclette selon l'une quelconque des revendications 1 à 9, avec un premier et un deuxième générateurs de mesure qui sont disposés sur le corps rotatif à une distance axiale ou radiale l'un de l'autre et se composent d'anneaux entourant radialement le corps rotatif constitués de champs présentant un comportement de signal alternativement différent, le nombre des champs des deux anneaux étant égal, avec un premier transducteur associé au premier générateur de mesure et un deuxième transducteur associé au deuxième générateur de mesure, qui fournissent tous deux des signaux de sortie à partir desquels sont formés des premiers et deuxièmes signaux rectangulaires, le couple moyen étant déterminé à partir des distances des flancs des premiers et deuxièmes signaux rectangulaires sur une rotation complète du corps rotatif, **caractérisé en ce que** les champs présentant un comportement de signal alternativement différent forment des anneaux ininterrompus (7, 8), **en ce que** le dispositif est pourvu d'une unité de calcul électronique, et **en ce que** les signaux détectés par le premier et le deuxième transducteurs (9, 10) peuvent être acheminés à l'unité de calcul électronique, qui présente des mémoires pour le stockage du rapport $\beta_{ml}$ sans couple et/ou de la constante de calibrage k et/ou de la valeur limite déterminée de la vitesse rotationnelle ou de la vitesse angulaire du corps rotatif (2) et/ou de la distance des flancs déterminée $\alpha_{max}$ et des moyens pour réaliser chaque étape individuelle de l'évaluation selon les revendications 1 à 9, afin que l'unité de calcul électronique puisse générer un signal de sortie correspondant au couple à déterminer.

11. Dispositif selon la revendication 10, **caractérisé en ce qu'**une unité d'affichage peut être commandée par le signal de sortie de l'unité de calcul.

12. Dispositif selon l'une quelconque des revendications 10 et 11, **caractérisé en ce que** l'unité de calcul électronique est un microcontrôleur (13) ou un micro-ordinateur.

13. Dispositif selon la revendication 10, **caractérisé en ce que** le premier et/ou le deuxième générateurs de mesure (3, 4) sont des champs présentant un comportement de signal optiquement différent et le premier et/ou le deuxième transducteurs (9, 10) sont des transducteurs détectant un comportement de signal optiquement différent.

14. Dispositif selon la revendication 13, **caractérisé en ce que** le premier et/ou le deuxième générateurs de mesure se composent d'un disque de mesure (5, 6) ou d'un cylindre de mesure, qui présentent les champs de comportement de signal différent sur leur surface plane radiale ou sur leur surface d'enveloppe cylindrique.

15. Dispositif selon la revendication 14, **caractérisé en ce que** les champs présentent un comportement de réflexe différent.

16. Dispositif selon la revendication 15, **caractérisé en ce que** les champs présentent une réflexion haute et faible alternée.

Figur 1

Figur 3

Figur 2

Figur 4a

Figur 4b

Figur 5

Figur 6a

Figur 6b

Erfassen der ersten steigenden Flanke
des ersten Rechtecksignals und der ersten
steigenden und fallenden Flanke des
zweiten Rechtecksignals

$\downarrow$

Messen von $T_{ml}$ und $\alpha_{ml}$

$\downarrow$

Vergleich $T_{ml} > T_{grenz}$ —— ja ——

*Figur 7a*

nein

$\downarrow$

Vergleich $\alpha_{ml} > \alpha_{max}$ | ja $\rightarrow$ | Messen von $\alpha_{ml}'$

nein

$\downarrow \quad \downarrow$

Summierung aller $T_{ml}$ und
$\alpha_{ml}$ oder $\alpha_{ml}'$ einer vollständigen
Umdrehung

$\downarrow$

Bilden von $\beta_{ml} = \Sigma\alpha_{ml}/\Sigma T_{ml}$
oder von $\beta_{ml} = \Sigma\alpha_{ml}'/\Sigma T_{ml}$

$\downarrow$

Ablage von $\beta_{ml}$ in Speicher

$\downarrow$

```
                                    ↓
        ┌──────────────────────────────────────────┐        ←
        │  Erfassen der ersten steigenden Flanke des │        ←
        │  ersten und des zweiten Rechtecksignals    │        ←
        └──────────────────────────────────────────┘
                                    ↓
              ┌──────────────────────────────┐
              │   Messen von T_m und α_m      │
              └──────────────────────────────┘
                                    ↓
              ┌──────────────────────────────┐        ja
Figur 7b      │  Vergleich mit T_m > T_grenz  │───────────
              └──────────────────────────────┘
                                  nein
                                    ↓
              ┌──────────────────────────────┐
              │  Summierung aller T_m und α_m │
              │  einer vollständigen Umdrehung │
              └──────────────────────────────┘
                                    ↓
              ┌──────────────────────────────┐
              │  Bilden von β_m = Σα_m/ΣT_m    │
              └──────────────────────────────┘
                                    ↓
              ┌──────────────────────────────┐
              │  Bilden von W = (β_m − β_ml)·k │
              │  oder W = (β_m − β'_ml)·k      │
              └──────────────────────────────┘
                                    ↓
          ┌──────────────────────────────────┐
          │  Bilden von M̄ = (β_m − β_ml)·k/2π │
          └──────────────────────────────────┘
```

Messen von $T_m$ und $\alpha_m$

Vergleich mit $T_m > T_{grenz}$

Summierung aller $T_m$ und $\alpha_m$ einer vollständigen Umdrehung

Bilden von $\beta_m = \Sigma\alpha_m / \Sigma T_m$

Bilden von $W = (\beta_m - \beta_{ml}) \cdot k$
oder $W = (\beta_m - \beta'_{ml}) \cdot k$

Bilden von $\overline{M} = (\beta_m - \beta_{ml}) \cdot k/2\pi$

14

t

$\overline{P} = (\beta_m - \beta_{ml}) \cdot k/t$

14'

Figur 8

$$\beta_m = \frac{\sum \alpha_m}{\sum T_m}$$

$$\frac{\alpha_i}{T_i}$$

1 Umdrehung = $2\pi$ = N Felder

Drehwinkel $\varphi$ Rotationskörper
bzw.
Laufvariable n (Anzahl Felder)

$$\beta_{ml} = \frac{\sum \alpha_{ml}}{\sum T_{ml}}$$

Figur 9

$M$

$$W = (\beta_m - \beta_{ml}) * k = \overline{M} * 2\pi$$

$\overline{M}$

1 Umdrehung = $2\pi$ = N Felder

Drehwinkel $\varphi$ Rotationskörper
bzw.
Laufvariable n (Anzahl Felder)